# EUROPÄISCHE PATENTSCHRIFT

(11) **EP 0 733 655 B1**
(45) Veröffentlichungstag und Bekanntmachung des Hinweises auf die Patenterteilung: **04.09.2002**
(21) Anmeldenummer: 96101978.3
(22) Anmeldetag: 12.02.1996
(51) Int. Cl.: C08G 18/42, C08G 18/86, C08G 18/87

(54) **Peroxidisch und mit Schwefel vulkanisierbare Polyurethane**
Peroxyd and sulfur vulcanisable polyurethanes
Polyuréthanes vulcanisables à l'aide de peroxyde et de soufre

(30) Priorität: 23.02.1995 DE 19506251
(43) Veröffentlichungstag der Anmeldung: 25.09.1996
(73) Patentinhaber: BAYER AG, 51368 Leverkusen (DE)
(72) Erfinder: Meckel, Walter, Dr., D-41468 Neuss (DE); Klussmann, Henning, D-41569 Rommerskirchen (DE); König, Klaus, Dr., D-51519 Odenthal (DE); Schröter, Axel, D-67316 Carlsberg (DE)

(56) Entgegenhaltungen:
- EP-A- 0 062 995
- DE-A- 1 595 805
- DE-A- 2 061 957
- DE-B- 1 152 535
- FR-A- 1 032 926
- CHEMICAL ABSTRACTS, vol. 79, no. 4, 30.Juli 1973 Columbus, Ohio, US; abstract no. 20073b, NAGOSHI ET AL: "polyurethane elastomers" Seite 69; Spalte 2; XP002005332 & JP-A-07 314 792 (KURARAY)
- CHEMICAL ABSTRACTS, vol. 69, no. 6, 1968 Columbus, Ohio, US; abstract no. 20173m, GHATGE ET AL: "MILLABLE POLYURETHANE GUMS" Seite 1909; Spalte 2; XP002005333 & RUBBER AGE , Bd. 100, Nr. 4, 1968, NEW YORK, USA , Seiten 60-65,

## Beschreibung

Polyurethanelastomere (PUR) sind in den letzten Jahren in stetig wachsenden Mengen hergestellt worden. Da sie aus diskreten Weichsegmenten (Polyester, Polyether), Kettenverlängerern (Diamine, Diole) und Diisocyanaten aufgebaut werden, können ihre Eigenschaften in weiten Grenzen eingestellt werden.

Insbesondere PUR auf Basis von Polyesterglykolen zeichnen sich durch hohe mechanische Festigkeiten, hohe Abriebbeständigkeit und gute Beständigkeit gegen Kraftstoffe und Hydrauliköle aus. Aus diesem Grunde werden diese PUR zunehmend in Kraftfahrzeugen beispielsweise für Membranen und Dichtungen verwendet.

PUR-Formteile können durch Gießen oder - besonders kostengünstig - durch Spritzguß und durch Extrusion hergestellt werden. Für Betriebstemperaturen über 0°C erfüllen solche PUR alle Anforderungen. Bei sehr tiefen Temperaturen können Schwierigkeiten auftreten. Wenn beispielsweise eine PUR-Dichtung unter hohem Druck längere Zeit Temperaturen von -20 bis -40°C ausgesetzt wird, kann sie einfrieren und ihre Dichtfunktion verlieren. Für solche Anwendungen werden deshalb oft Dichtungen auf Basis von Silikonkautschuk oder Epichlorhydrinkautschuk verwendet, die allerdings geringe Ölbeständigkeit und hohe Gaspermeabilitäten aufweisen.

Gegenstand der Erfindung sind peroxidisch und mit Schwefel vulkanisierbare Polyurethane aus
A) 1,0 Mol eines Polyesterglykols mit einem Molekulargewicht von 3000 bis 7000, aus Adipinsäure und 2-Methylpropandiol-1,3, wobei bis zu 60 Mol-% des 2-Methylpropandiol-1,3 durch Ethandiol und/oder Butandiol-1,4 ersetzt sein kann,
B) 0 bis 2,5 Mol Diol vom Molekulargewicht 62 bis 200 und
C) 0,95 bis 3,6 Mol Diisocyanat
bei einem Molverhältnis der Isocyanatgruppen in C) zu den isocyanatreaktiven Gruppen in A) und B) (NCO/OH-Molverhältnis) von 0,95 bis 1,01.

Diese PUR behalten ihre günstigen Kautschukeigenschaften nach der Vulkanisation auch bei Temperaturen bis zu -40°C.

Die Polyesterglykole A) enthalten in polymerer Form Adipinsäure und 100 bis 40 Mol-% 2-Methylpropandiol-1,3 und 0 bis 60 Mol-% Ethandiol und/oder Butandiol-1,4. Sind beide vorhanden, dann ist das Molverhältnis bevorzugt 2 zu 1. Die Molekulargewichte sind 3000 bis 7000, vorzugsweise 3500 bis 5000.

Die Polyesterglykole A) können nach Standardverfahren hergestellt werden, beispielsweise durch Schmelzkondensation aus den Dicarbonsäuren und den Glykolen bei 180 bis 230°C. Gegen Ende der Reaktion kann die Veresterung durch Anlegen von Vakuum, Einsatz von Schleppmitteln und Zugabe von Katalysatoren beschleunigt werden.

Zum Aufbau der erfindungsgemäßen PUR werden 0 bis 2,5 Mol auf ein Mol Polyesterglykol an niedermolekularen Kettenverlängerern B) der Molekulargewichte 62 bis 200 benötigt. Vorzugsweise werden 0,2 bis 0,8, besonders bevorzugt 0,3 bis 0,6 Mol Ethylenglykol, Butandiol-1,4 und/oder Bis-(2-hydroxyethoxy)-benzol oder 0,2 bis 2,5, vorzugsweise 0,8 bis 1,5 Mol Glycerinmonoallylether oder Trimethylolpropanmonoallylether eingesetzt.

Als Diisocyanate C) werden die übliche bekannte Produkte verwendet, bevorzugt werden 4,4'-Diisocyanatodiphenylmethan, Toluylendiisocyanat, Hexamethylendiisocyanat oder 4,4'-Diisocyanatodicyclohexylmethan eingesetzt.

Das Molverhältnis der Isocyanatgruppen in C) zu isocyanatreaktiven Gruppen in A) und B) (NCO/OH-Verhältnis) ist 0,95 bis 1,01, vorzugsweise 0,98 bis 1,00.

Im allgemeinen werden bei Verwendung von 4,4'-Diisocyanatodiphenylmethan nur geringe Kettenverlängerermengen beispielsweise 0 bis 1,0 Mol pro Mol Polyesterglykol eingesetzt, während bei Verwendung von Toluylendiisocyanat, Hexamethylendiisocyanat oder 4,4'-Diisocyanatodicyclohexylmethan die Anwesenheit von allylischen Gruppen in einer Menge von 0,6 bis 2,5 Mol pro Mol Polyesterglykol notwendig sind. Diese werden vorzugsweise durch Verwendung von Glycerinund/oder Trimethylolpropanmonoallylether als Kettenverlängerer eingeführt. Es können selbstverständlich auch Mischungen der Kettenverlängerer und Diisocyanate eingesetzt werden.

Die PUR können entweder in der Schmelze mit Hilfe eines Mischkopfs oder in einem Reaktionsextruder hergestellt werden, wobei die Reaktanten gleichzeitig oder nacheinander bei 100 bis 220°C umgesetzt und anschließend gegebenenfalls noch ausgeheizt werden. Es ist aber auch eine Herstellung in Lösungsmitteln wie Toluol, Methylethylketon oder Ethylacetat möglich, wobei am Ende der Polyaddition das Lösungsmittel entfernt wird.

Für den endgültigen Einsatz werden die PUR mit Füllstoffen, Stabilisatoren, Pigmenten, zusätzlichen Vernetzungskomponenten wie beispielsweise Trisallylcyanurat, Peroxiden oder Schwefel vermischt und während und/oder nach der Formgebung durch eine Wärmebehandlung vulkanisiert. Die so erhaltenen Formkörper zeichnen sich durch hervorragende Tieftemperatureigenschaften und sehr niedrige Druckverformungsreste bis zu Temperaturen von -40°C aus.

### Beispiele

### Polyesterpolyole A

- A-1: Hydroxylpolyester aus Adipinsäure und 40 Mol-% Butandiol-1,4 und 60 Mol-% 2-Methylpropandiol-1,3
MG: 3900, Hydroxylzahl 28,5
Der Polyester weist im DSC keinen Schmelzpeak auf.
- A-2: Hydroxylpolyester aus Adipinsäure und 50 Mol-% Butandiol-1,4 und 50 Mol-% 2-Methylpropandiol-1,3
MG: 3900, Hydroxylzahl 28,8
Der Polyester weist im DSC keinen Schmelzpeak auf.
- A-3: Hydroxylpolyester aus Adipinsäure und 70 Mol-% Butandiol-1,4 und 30 Mol-% 2-Methylpropandiol-1,3
MG: 3200, Hydroxylzahl 34,8
Der Polyester weist im DSC einen Schmelzpeak im Bereich 10 und 33°C auf.
- A-4: Hydroxylpolyester aus Adipinsäure und 65 Mol-% Butandiol-1,4 und 35 Mol-% 2-Methylpropandiol-1,3
MG: 3800, Hydroxylzahl 29,7
Der Polyester weist im DSC einen Schmelzpeak im Bereich 10 und 28°C auf.
- A-5: Hydroxylpolyester aus Adipinsäure und 32 Mol-% Butandiol-1,4, 47 Mol-% Ethylenglykol und 21 Mol-% Hexandiol-1,6
MG: 3900, Hydroxylzahl 28,8
Der Polyester weist im DSC keinen Schmelzpeak auf.
- A-6: Hydroxylpolyester aus Adipinsäure und 25 Mol-% Butandiol-1,4 und 75 Mol-% Ethylenglykol
MG: 3900, Hydroxylzahl 28,8
Der Polyester weist im DSC einen Schmelzpeak im Bereich 15 und 36°C auf.

Für die DSC-Bestimmung werden die flüssigen Polyesterglykole in Aluminiumpfännchen eingewogen (ca. 20 bis 30 mg), für drei Tage bei 0°C gelagert und dann von -50 bis 150°C mit einer Aufheizrate von 20°C/Min. untersucht.

### Kettenverlängerer

| | |
|---|---|
| B-1 | Butandiol-1,4 |
| B-2 | 1-Allyloxy-propandiol-2,3 |

### Diisocyanate

| | |
|---|---|
| C-1 | 4,4-Diisocyanatodiphenylmetha |

### Herstellung der Polymere

Die Polyesterpolyole A) werden mit den Kettenverlängerern B) gemischt und für 60 Minuten bei 100°C bei ca. 27 mbar (20 mHg) unter Rühren entwässert.

Bei ca. 130°C wird das Diisocyanat C) zugegeben und ca. 4 Minuten gerührt. Die Reaktionswärme läßt die Temperatur bis auf 140°C ansteigen.

Das Polymer wird in Teflonschalen gegossen und bei 110°C für 24 Stunden ausgeheizt.

### Polymere

| Polymer | Polyester (Mol) | Verlängerer (Mol) | Diisocyanat (Mol) | Mooney-Wert¹⁾ |
|---|---|---|---|---|
| Pol-1 | 1.0 A-1 | 0,4 B-1 | 1,39 C-1 | 42 |
| Pol-2 | 1,0 A-2 | 0,4 B-1 | 1,40 C-1 | 45 |
| Pol-3 | 1,0 A-3 | 0,4 B-1 | 1,38 C-1 | 39 |
| Pol-4 | 1,0 A-4 | 0,4 B-1 | 1,39 C-1 | 47 |
| Pol-5 | 1,0 A-5 | 0,4 B-1 | 1,38 C-1 | 40 |
| Pol-6 | 1,0 A-6 | 0,4 B-1 | 1,39 C-1 | 35 |

| | | | | |
|---|---|---|---|---|
| ¹⁾ ML-1+4/100°C | | | | |

Die Polymere Pol-1 und Pol-2 sind erfindungsgemäß.

### Herstellung der Prüfkörper

### Vulkanisation mit Peroxiden (P)

100 Gew.-Teile Polymer werden auf der Walze mit 1,5 Gew.-Teilen Stabaxol P (polymeres Carbodiimid der Bayer AG), 20 Gew.-Teilen Ruß Corax N 330 (Degussa AG) und 6 Gew.-Teilen Dicup 40C (mit 60 Gew.-% Calciumcarbonat phlegmatisiertes Dicumylperoxid, Hercules GmbH, Düsseldorf) für 10 Minuten homogenisiert.

Die Rohmischung wird unter Formgebung 30 Minuten bei 160°C vulkanisiert.

### Mechanische Daten

| Polymer | Vulkanisation | Zugfestigkeit (MPa) | Bruchdehnung (%) | Härte Shore A | Elastizität (%) | Glaspunkt (°C) |
|---|---|---|---|---|---|---|
| Pol-1 | P | 31 | 451 | 62 | 62 | -49 |
| Pol-2 | P | 31 | 436 | 62 | 62 | -49 |
| Pol-3 | P | 33 | 382 | 61 | 62 | -49 |
| Pol-4 | P | 32 | 408 | 61 | 68 | -49 |
| Pol-5 | P | 35 | 550 | 62 | 61 | |
| Pol-6 | P | 34 | 450 | 68 | 62 | -38 |

Die Zugfestigkeit und Bruchdehnung werden nach DIN 53 504, die Shore-Härte A nach DIN 53 505, die Elastizität nach DIN 53 512 und der Glaspunkt nach DIN 53 445 bestimmt.

### Druckverformungsprüfung

6 mm dicke Stopfen werden für die angegebene Zeit und Temperatur auf 75 % ihrer Dicke komprimiert, anschließend entlastet und nach 30 Minuten die Dicke bei Prüftemperatur vermessen. Der Wert gibt die noch verbleibende Restverformung in Prozent an (in Anlehnung an DIN 53 517).

| Temp. (°C) | Zeit (h) | Pol-1 | Pol-2 | Pol-3 | Pol-4 | Pol-5 | Pol-6 |
|---|---|---|---|---|---|---|---|
| -10 | 24 | 14 | 14 | 99 | 94 | 100 | 67 |
| | 72 | 15 | 14 | 99 | 97 | - | 96 |
| | 168 | 16 | 14 | 99 | 98 | - | 99 |
| -20 | 24 | 29 | 24 | 100 | 99 | 100 | 78 |
| | 72 | 21 | 21 | - | 100 | - | 99 |
| | 168 | 20 | 26 | - | - | - | 100 |
| -30 | 24 | 25 | 32 | 100 | 100 | 100 | 43 |
| | 72 | 35 | 44 | - | - | - | 64 |
| | 168 | 32 | 57 | - | - | - | 95 |
| -40 | 24 | 47 | 42 | 84 | 70 | 100 | 57 |
| | 72 | 47 | 48 | 99 | 99 | - | 55 |
| | 168 | 48 | 54 | 100 | 100 | - | 57 |

Wie man sieht, weisen die erfindungsgemäßen Beispiele bei allen Prüftemperaturen DVR-Werte von kleiner 60 % auf.

## Patentansprüche

1. Peroxidisch und mit Schwefel vulkanisierbare Polyurethane aus
A) 1,0 Mol eines Polyesterglykols mit einem Molekulargewicht von 3000 bis 7000, aus Adipinsäure und 2-Methylpropandiol-1,3, wobei bis zu 60 Mol-% des 2-Methylpropandiol-1,3 durch Ethandiol und/oder Butandiol-1,4 ersetzt sein können,
B) 0 bis 2,5 Mol Diol vom Molekulargewicht 62 bis 200 und
C) 0,95 bis 3,6 Mol Diisocyanat
bei einem Molverhältnis der Isocyanatgruppen in C) zu den isocyanatreaktiven Gruppen in A) und B) von 0,95 bis 1,01.

2. Polyurethane nach Anspruch 1, worin B) 0,2 bis 0,8 Mol Ethandiol und/oder Butandiol-1,4 und/oder Hexandiol-1,6 und C) 4,4'-Diisocyanatodiphenylmethan ist.

3. Polyurethane nach Anspruch 1, worin B) 0,2 bis 2,5 Mol Glycerinund/oder Trimethylolpropanmonoallylether und C) Hexamethylendiisocyanat und/oder 4,4'-Diisocyanatodicyclohexylmethan ist.

## Claims

1. Polyurethanes vulcanizable by peroxides and sulfur and consisting of
A) 1.0 mol of a polyester glycol having a molecular weight of 3000 to 7000 consisting of adipic acid and 2-methylpropanediol-1,3, wherein up to 60 mol.% of the 2-methylpropanediol-1,3 can be replaced by ethanediol and/or butanediol-1,4,
B) 0 to 2.5 mol of diol having a molecular weight of 62 to 200 and
C) 0.95 to 3.6 mol of diisocyanate
with a molar ratio of the isocyanate groups in C) to the isocyanate-reactive groups in A) and B) of 0.95 to 1.01.

2. Polyurethanes according to Claim 1, wherein B) is 0.2 to 0.8 mol of ethanediol and/or butanediol-1,4 and/or hexanediol-1,6 and C) 4,4'-diisocyanatodiphenylmethane.

3. Polyurethanes according to Claim 1, wherein B) is 0. to 2.5 mol of glycerol and/or trimethylolpropane monoallylether and C) is hexamethylenediisocyanate and/or 4,4'-diisocyanatodicyclohexylmethane.

## Revendications

1. Polyuréthannes vulcanisables par les peroxydes et par le soufre, obtenus à partir de
A) 1,0 mol d'un polyester-glycol, de poids moléculaire 3000 à 7000, de l'acide adipique et du 2-méthylpropanediol-1,3, jusqu'à 60 mol % de ce dernier pouvant être remplacé par de l'éthanediol et/ou du butanediol-1,4,
B) 0 à 2,5 mol d'un diol de poids moléculaire 62 à 200 et
C) 0,95 à 3,6 mol de diisocyanate
à un rapport molaire de 0,95 à 1,01 entre les groupes isocyanate de C) et les groupes réactifs avec les isocyanates de A) et B).

2. Polyuréthannes selon la revendication 1, pour lesquels le composant B) consiste en 0,2 à 0,8 mol d'éthanediol et/ou de butanediol-1,4 et/ou d'hexanediol-1,6 et le composant C) consiste en le 4,4'-diisocyanatodiphénylméthane.

3. Polyuréthannes selon la revendication 1, pour lesquels le composant B) consiste en 0 à 2,5 mol d'éther monoallylique du glycérol et/ou du triméthylolpropane et le composant C) consiste en l'hexaméthylènediisocyanate et/ou le 4,4'-diisocyanatodicyclohexylméthane.
